# EUROPEAN PATENT APPLICATION

(11) **EP 3 291 501 A1**
(43) Date of publication of application: **07.03.2018**
(21) Application number: 16186580.3
(22) Date of filing: 31.08.2016
(51) Int. Cl.: H04L 29/06

(54) **SYSTEM AND METHOD FOR USING A VIRTUAL HONEYPOT IN AN INDUSTRIAL AUTOMATION SYSTEM AND CLOUD CONNECTOR**

(71) Applicant: Siemens Aktiengesellschaft, 80333 München (DE)
(72) Inventor: Woronka, Stefan, 38271 Baddeckenstedt (DE)

(57) **Abstract**

The invention relates to a system comprising
a first network with at least one network device (1a-1d), a second network with a cloud-computing infrastructure,
a module with a first interface and a second interface, whereas the first interface is in communication with the first network and the second interface is in communication with the second network,
whereas the module comprises at least one virtual honeypot (6a-6d) which simulates the at least one network device (1a-1d).

Furthermore, the invention relates to a Cloud Connector and a method.

## Description

An industrial automation system is used to control machine processes in manufacturing. Industrial automation system comprises multiple computerized devices, which control industrial processes. The industrial devices generate a large amount of industrial automation system data to be monitored. The devices of an industrial automation system must work together in a coordinate way and performing operations. The local control algorithm may also perform local data analytics (on-board analytics).

Protecting an automation system network against unauthorized intrusion has proven more and more difficult over the years. Undesirable software such as malware may be used or created to disrupt device operation, gather sensitive information and/or gain access to automation systems. The undesirable software may comprise, for example, viruses, worms, Trojan horses, spy-ware, adware and/or other malicious programs. The recognition of these attacks, both from inside and outside of the automation system, is increasingly hampered by various technologies.

At present the detection is set on systems such as Security Information and Event Management, which collect data from all attached systems. These are then submitted to a special engineering in each case. So relevant data can be collected.

Traditional approaches to secure an automation system range from the deployment of intrusion detection systems to mechanism for blocking unauthorized network traffic, i.e. through the use of a network traffic filter such as a "firewall."

A recent development has been the deployment of what are referred as "honeypots" in the state in the art.

A honeypot is a system designed to be susceptible to compromise by some potential unknown attacker.

Unfortunately, such a honeypot is very difficult to deploy, configure and administer in a manner that does not compromise the security of other machines in the network. Furthermore, such honeypots need to be installed locally.

It is therefore a first object of the present invention to specify a system with an improved honeypot architecture that is easier to deploy, configure and administer. It is a further object of the present invention to specify a method with such an improved honeypot architecture. Another object of the present invention is to specify a Cloud Connector.

The system-specific object is inventively achieved by means of a system comprising a first network with at least one network device, a second network with a cloud-computing infrastructure, a module with a first interface and a second interface, whereas the first interface is in communication with the first network and the second interface is in communication with the second network, whereas the module comprises at least one virtual honeypot, which simulates the at least one network device.

The connector-specific object is inventively achieved by means of a Cloud Connector with a first interface and a second interface, whereas the first interface is in communication with a first network and the second interface is in communication with a second network, whereas the first network comprises at least one network device and the second network comprises a cloud-computing infrastructure, whereas the Cloud Connector comprises at least one virtual honeypot which simulates the at least one network device.

The method-specific object is inventively achieved by means of a method comprising
- providing a first network with at least one network device and a second network with a cloud-computing infrastructure,
- providing a module with a first interface and a second interface, whereas the first interface is in communication with the first network and the second interface is in communication with the second network,
- and providing at least one virtual honeypot in the module which simulates the at least one network device.

According to the invention it was recognized that industrial automation systems nowadays are more open for attacks from the cyber world than before. This is a result due to increased cross-linking or by an increased complexity through the use of various technologies. This complexity requires that unauthorized users are also increasingly active within the industrial automation system. This may consciously or unconsciously trigger attacks. The number of attacks from inside and outside is thus increasing. The recognition of these attacks is increasingly hampered by complex technology. Therefore, honeypots can be used. However, these are complicated to configure and to kept up to date. A further disadvantage is the local installation and maintenance.

This is now solved by the invention. Here a virtual honeypot which simulates/emulates exactly the at least one network device is provided. The central virtual installation and maintenance of a virtual honeypot invention enables a significant cost in comparison to a local installation. Similarly, the maintenance is much cheaper.

In addition, virtual honeypots, which are specifically adapted to the automation system, can be installed. Thus, a significantly higher level of protection is possible. As a result, the benefits of the honeypots are improved.

As a further result, a central and speedy detection of attacks on the industrial automation system connected to the cloud arises.

The dependent claims list further advantageous measures which can be combined with one another, as desired, in order to achieve further advantages.

In a preferred embodiment the module is configured as a Cloud Connector. It is to note, that the module is not limited to a Cloud Connector. The module can also be configured as an industrial controller, or another gateway. The module can be part of the second network or the first network but is not limited to these examples.

Preferably the first network is an industrial automation system. Preferably the second network is a cloud. The network devices are then field devices as described above.

In one example malicious traffic created by a sender, for example an attacker, is received by the virtual honeypot. A faked response to the malicious traffic is created then by the virtual honeypot. This response is forwarded to the sender for distraction.

Preferably the activity of the sender, which has created the malicious traffic received by the at least one virtual honeypot, is monitored and/or recorded by the at least one virtual honeypot. By monitoring the activity of an unauthorized intruder through the virtual honeypot, the network administrator can identify tactics and tools used by the attacker.

In another preferred embodiment the virtual honeypot is executed as virtual machine or virtual appliance on the module. Preferably the virtual honeypot has no access to the protected first network. Therefore, there is no need to install the honeypot locally in the protected first network.

In another preferred embodiment the at least one network device consists of a parameter profile and the at least one virtual honeypot is downloaded from the first network device with respect to this parameter profile. The profile of the at least one network device is also stored in the module. Via a corresponding interface to the second network the virtual honeypot can be updated easily.

In another example the at least one virtual honeypot comprises weak or no security features. Thus the at least one virtual honeypot becomes interesting for the attacker.

In another preferred embodiment the module is configured as a software agent.

Further features, properties and advantages of the present invention are found in the following description of exemplary embodiments with respect to the appended figures, of which:
- FIG 1: shows the common architecture of an industrial automation system,
- FIG 2: shows a first embodiment according to the invention.

Although the invention has been illustrated and described in detail with reference to the preferred exemplary embodiment, the invention is not limited to the examples disclosed and other variations can be derived therefrom by the person skilled in the art without departing from the protective scope of the invention.

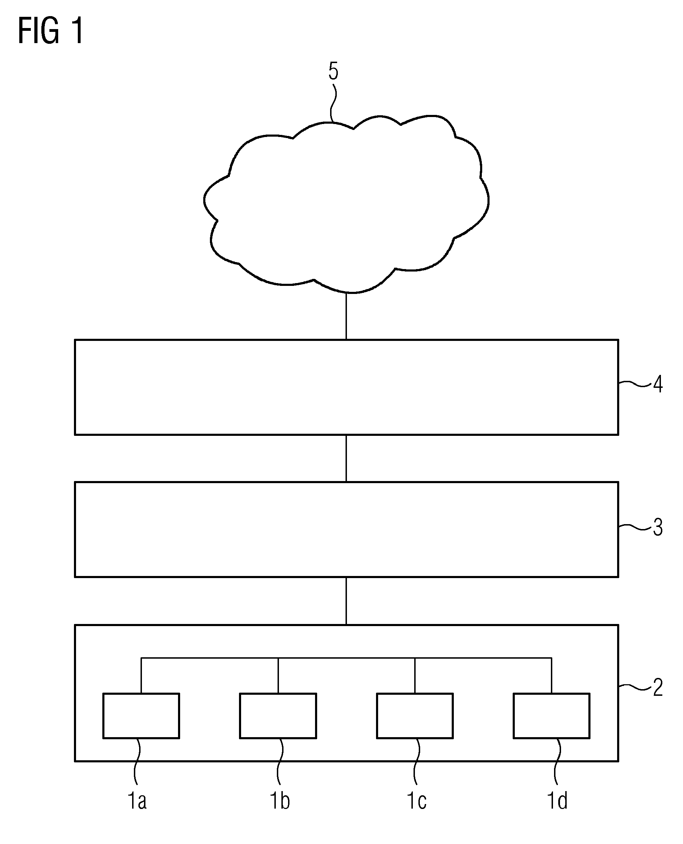

FIG 1 shows a common industrial automation system 2 with field devices 1a-1d according to the state of the art. Field devices 1a-1d for recording and/or modifying process variables are frequently used in process automation system technology as well as in manufacture automation system technology. Measuring devices or sensors, such as level measuring devices, flow meters, pressure and temperature measuring devices, pH-redox potential meters, conductivity meters etc., are used for recording the respective process variables such as fill level, flow, pressure, temperature, pH level and conductivity. Actuators, such as e.g. valves or pumps, are used to influence process variables. Thus, the flow rate of a fluid in a pipeline section or a filling level in a container can be altered by means of actuators.

Field devices 1a-1d in general refer to all devices which are process-oriented and which provide or edit process-relevant information. In addition to the aforementioned measuring devices/sensors and actuators, units that are directly connected to a field bus and used for communication with superordinate units, such as e.g. remote I/Os, gateways, linking devices and wireless adapters, are also generally referred to as field devices. Because of the large number of system variables that must be monitored and controlled, industrial automation systems 2 often generate vast amounts of data. Moreover, such industrial automation systems 2 can operate on a twenty-four-hour basis. The industrial automation system data can be collected in a cloud 5, wherein industrial automation system data can be accumulated and made available to a user or users via the cloud 5. Where the field devices 1a-1d are distributed geographically, the cloud 5 advantageously provides a facility for accessing data from multiple, distributed field devices 1a-1d.

The term "cloud" is a shorthand reference to a network device with a cloud computing infrastructure. The cloud 5 includes one or more communication networks, such as the Internet, for example, and can further include portions of an industrial communications network, such as a local area network (LAN) or a wide area network (WAN). In cloud computing, a computing process may run on one or many connected cloud computers at the same time. In cloud computing, the cloud 5 can host and run an application anywhere in the world. Further, the cloud 5 enables access to the application from anywhere. The cloud 5 includes one or more data storage facilities for storing received industrial automation system data in some examples. The cloud 5 receives industrial automation system data from an industrial automation system 2 collected and passed by the Cloud Connector 3 and accumulates and stores the industrial automation system data. The cloud 5 in some examples processes and/or analyses the industrial automation system data.

If an industrial automation system 2 is attached to a cloud 5, then the devices 1a-1d of the automation system 2, which can be attached, must be first determined, be recognized and categorized. The devices 1a-1d collect data, which are then passed on to the cloud 5 through a Cloud Connector 3. A Cloud Connector 3 plays everywhere a role where a link or an interface is required. The Cloud Connector 3 serves as a link between cloud-based application and existing on-premise systems, for example the industrial automation system 2. The Cloud Connector 3 can be executed as a software agent, e.g. as reverse invoke proxy. The Cloud Connector 3 runs as on-premise agent in a secured network and acts as a reverse invoke proxy between the on-premise network and the network devices with a cloud infrastructure (Cloud).

It is not uncommon for malicious users or pranksters to attempt to communicate with industrial automation system 2 for example with the field devices 1a-1d to steal, delete or change data. Computer viruses, worms or Trojan horses may be distributed to the field devices 1a-1d. Security systems, such as firewalls 4 and antivirus software, provide significant protection of a typical industrial automation system 2. Although such security systems provide defence against many types of attacks, even a careful examination of their event logs provides limited information regarding how an attack was mounted. Further, such technologies often miss many attacks and infections. This problem is now solved by the invention.

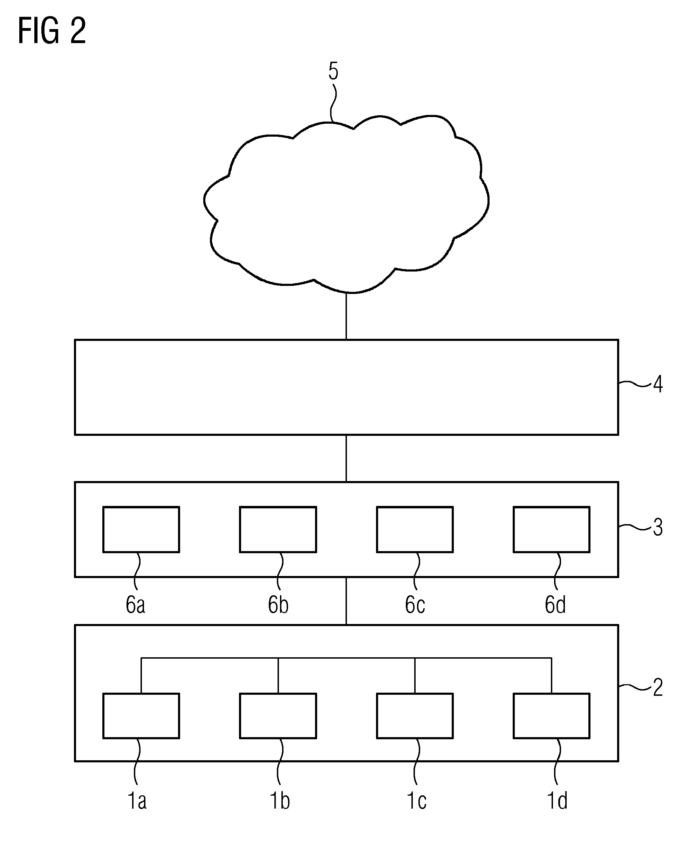

FIG 2 shows a first embodiment according to the invention. The invention provides a virtual honeypot 6a-6d, which simulates the field device 1a-1d and is installed on the Cloud Connector 3. So in FIG 2 a packet from an unknown client can be allocated to the virtual honeypot 6a-6d. Alternative (or in addition) a security application can be installed. The security application typically regulates or filters incoming network traffic in order to prevent unauthorized access, viruses, malware and other threads from reaching the protected network. So if the packet is allocated to the virtual honeypot 6a-6d or identified as a malware by the security application the packets is directed to the virtual honeypot 6a-6d. If the packet is not addressed to the virtual honeypot 6a-6d or the packets is not identified by the security application as a malware the packets can be processed normally. No legitimate traffic is directed to the virtual honeypot 6a-6d in the Cloud Connector 3. The attack can be from inside the industrial automation system 2 or from outside, e.g. a public network.

The virtual honeypot 6a-6d appears to be a local field device to the attacker.

The Cloud Connector 3 itself is aware of all the field devices 1a-1d, which are used in the industrial automation system 2. To build up the virtual honeypot 6a-6d the parameter profiles of the devices 1a-1d are used. To get all the profiles und identify all the devices 1a-1d a passive and an active scan can be done by the Cloud Connector 3. Of course this is just one possibility to gain all the parameter profile about the devices 1a-1d. These profiles will now be used to download preconfigured honeypots 6a-6d from the cloud 5. These are then implemented as virtual machines or virtual appliance on the Cloud Connector 3. These virtual machine or virtual appliance then simulates the virtual honeypot 6a-6d. The virtual honeypot 6a-6d is then expected to attract the appropriate attacker.

Preferably the Cloud Connector 3 creates a new virtual honeypot 6a-6d at the same time the Cloud Connector 3 becomes aware of a new device 1a-1d. The virtual honeypot 6a-6d is deployed on the Cloud Connector 3 to simulate/emulate a local honeypot, here the field devices 1a-1d.

Therefore, preferably all the devices 1a-1d are simulated by a virtual honeypot 6a-6d in the Cloud Connector 3.

The peculiarity is, that the virtual honeypots 6a-6d exactly simulates the devices 1a-1d, which are installed in the automation system 2. To make the virtual honeypots 6a-6d interesting for the attacker, they can be executed without any further security measures. For example, a Web Server can be emulated without access protection in a virtual honeypot 6a-6d for PLCs (Programmable Logic Controller, PLC). An unpatched Windows or other operating systems is also possible. If then the attacker attempts to contact a virtual honeypot 6a-6d, this will be recognized by the virtual honeypot 6a-6d. The activities of the attacker can be tracked down, collected and reported for example as an activity report to the cloud 5, for example to the company which runs the cloud 5. Therefore, an appropriate interface to the cloud 5 must be present. This activity report can be used for creating new honeypots 6a-6d and updating the virtual honeypots 6a-6d can be done easily through the cloud 5.

The virtual honeypots 6a-6d advantageously need not even be connected with any of the components of the rest of the first network, here the industrial automation system 2. In fact, the virtual honeypot 6a-6d and industrial automation system 2 can be operated and maintained by specialists completely separate from the organization administering the industrial automation system 2. The virtual honeypot 6a-6d can be operated as a service to the organization running the industrial automation system 2.

The virtual honeypot 6a-6d therefore appears to other systems to be a local field device 1a-1d. The virtual honeypot 6a-6d further monitors and tracks attacker's activity, and provides activity data such as activity reports to the cloud's administrator by a special interface, so that the administrator can use the data to learn how attackers attempt to gain access to devices and can gather forensic evidence to aid in the identification and prosecution of attackers. Further, the virtual honeypot 6a-6d may divert attacks from real devices 1a-1d, effectively diverting dangerous activity away from sensitive networked assets.

The virtual honeypot 6a-6d includes mail servers, database servers, or other systems that provide faked information or services that may be attractive to an attacker.

## Claims

1. System comprising
a first network with at least one network device (1a-1d),
a second network with a cloud-computing infrastructure,
a module with a first interface and a second interface, whereas the first interface is in communication with the first network and the second interface is in communication with the second network,
**characterized in that** the module comprises at least one virtual honeypot (6a-6d), which simulates the at least one network device (1a-1d).

2. System according to claim 1,
**characterized in that** the module is configured as a Cloud Connector (3).

3. System according to claim 1 or 2,
**characterized in that** the first network is an industrial automation system (3).

4. System according to any one of claims 1 to 3,
**characterized in that** malicious traffic created by a sender for example an attacker is received by the virtual honeypot (6a-6d).

5. System according to claim 4,
**characterized in that** a response to the malicious traffic is created by the virtual honeypot(6a-6d).

6. System according to claim 5,
**characterized in that** the response is forwarded to the sender.

7. System according to any one of the claims 4-6,
**characterized in that** the activity of the sender, which has created the malicious traffic received by the at least one virtual honeypot, is monitored and/or recorded by the at least one virtual honeypot (6a-6d).

8. System according to any one of the claims 1-7,
**characterized in that** the at least one virtual honeypot (6a-6d) is executed as virtual machine or virtual appliance on the module.

9. System according to any one of the claims 1-8,
**characterized in that** the at least one network device (1a-1d) comprises a parameter profile and the at least one virtual honeypot (6a-6d) is downloaded from the first network device with respect to this parameter profile.

10. System according to claim 9,
**characterized in that** the parameter profile of at least one network device (1a-1d) is stored in the module.

11. System according to any one of the claims 1-10,
**characterized in that** the at least one virtual honeypot (6a-6d) comprises weak or no security features.

12. System according to any one of the claims 1-11,
**characterized in that** the module is configured as a software agent.

13. System according to any one of the claims 1-12,
**characterized in that** the module is part of the first network.

14. Cloud Connector (3) with a first interface and a second interface,
whereas the first interface is in communication with a first network and the second interface is in communication with a second network,
whereas the first network comprises at least one network device (1a-1d) and the second network comprises a cloud-computing infrastructure,
**characterized in that** the Cloud Connector (3) comprises at least one virtual honeypot (6a-6d), which simulates the at least one network device (1a-1d).

15. Cloud Connector (3) configured to be executed on a system according to any one of the claims 1-13.

16. Method comprising
- providing a first network with at least one network device (1a-1d) and a second network with a cloud-computing infrastructure,
- providing a module with a first interface and a second interface, whereas the first interface is in communication with the first network and the second interface is in communication with the second network,
- and providing at least one virtual honeypot (6a-6d) in the module, which simulates the at least one network device.

17. Method according to claim 15 further comprising: downloading the preconfigured honeypot (6a-6d) from the second network.

18. Method configured to be executed on a system according to any one of the claims 1-13.
